# EUROPEAN PATENT APPLICATION

(11) **EP 3 582 121 A1**
(43) Date of publication of application: **18.12.2019**
(21) Application number: 17891577.3
(22) Date of filing: 09.11.2017
(51) Int. Cl.: G06F 17/30, G06F 17/28

(54) **COMPUTER SYSTEM, SERVER DEVICE, AND PROGRAM FOR USING SET OF ATTRIBUTE INFORMATION RELATING TO INDIVIDUAL**

(30) Priority: 10.01.2017 JP 2017001740
(71) Applicant: Alt Inc., Tokyo 101-0031 (JP)
(72) Inventor: EGUCHI Takashi, Tokyo 101-0031 (JP); YONEKURA Kazutaka, Tokyo 101-0031 (JP)
(74) Representative: Uexküll & Stolberg
(86) International application number: PCT/JP2017/040397
(87) International publication number: WO 2018/131272

(57) **Abstract**

A computer system for utilizing a cluster of attribute information of an individual comprises means for storing a cluster of attribute information of an individual, wherein the attribute information of the individual is expressed by a set of (S, P, O), S indicates a subject, P indicates an attribute, and O indicates a value of the attribute, and means for utilizing the cluster of attribute information of the individual. In one embodiment, the attribute of the individual comprises an individual property of the individual or memory of the individual. In one embodiment, the attribute of the individual is dependent on a subjective view of the individual.

## Description

### [Technical Field]

The present invention relates to a computer system, a server device, and a program for utilizing a cluster of attribute information of an individual.

### [Background Art]

A technology for extracting and storing the relationship between two items has been known. Patent Literature 1 discloses a system for extracting a corresponding relationship between a product name and product classification from inputted text data. The corresponding relationship extracted by the system of Patent Literature 1 is a universal corresponding relationship. The specific product name can be found from a product classification with such a system.

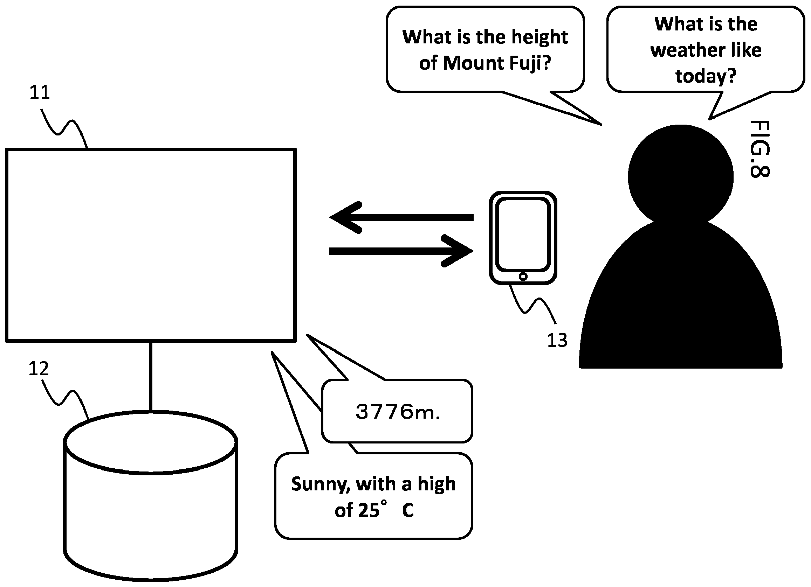

Figure **8** shows a conventional interactive device **11** answering a question from a user. The interactive device **11** is connected to a database unit **12.** The user can communicate with the interactive device **11** by using a user device **13** (e.g., personal computer, tablet, smartphone, or the like) that is connected to the interactive device **11.** The interactive device **11** receives a question from the user via the user device **13** and answers the question. The interactive device **11** searches in the database unit **12** to obtain information that is suitable for an answer to the question. For example, if a user asks "what is the height of Mount Fuji?", the interactive device **11** searches in the database unit **12** to obtain information related to the height of Mount Fuji, and answers "3776 meters". For example, if a user asks "what is the weather like today?", the interactive device **11** searches in the database unit **12** to obtain information related to today's weather and answers "Sunny, with a high of 25°C". Questions that can be answered by the interactive device **11** are limited to universal questions for which the answer is the same for everyone, such as the aforementioned "what is the height of Mount Fuji?" and "what is the weather like today?". This is because the database unit **12** for searching an answer stores universal subject matters in an encyclopedic manner.

### [Citation List]

### [Patent Literature]

[PTL 1] Japanese Laid-Open Publication No. 2011-103038

### [Summary of Invention]

### [Technical Problem]

The objective of the invention is to provide a computer system, a server device, and a program for utilizing a cluster of attribute information of an individual.

### [Solution to Problem]

The computer system for utilizing a cluster of attribute information of an individual of the invention comprises means for storing a cluster of attribute information of an individual, wherein the attribute information of the individual is expressed by a set of (S, P, O), S indicates a subject, P indicates an attribute, and O indicates a value of the attribute, and means for utilizing the cluster of attribute information of the individual.

In one embodiment of the invention, the attribute of the individual comprises an individual property of the individual or memory of the individual.

In one embodiment of the invention, the attribute of the individual is dependent on a subjective view of the individual.

In one embodiment of the invention, the computer system further comprises means for receiving a question, wherein the means for utilizing the cluster of attribute information of the individual comprises means for searching the cluster of attribute information of the individual based on the question, means for generating an answer to the question based on a result of the search, and means for outputting the answer.

In one embodiment of the invention, the means for searching comprises: means for extracting S and P from the question, means for identifying a set of (S, P, O) comprising S and P matching the S and P extracted from the question by searching the cluster of attribute information of the individual; and means for identifying O in the identified set of (S, P, O) as a result of the search.

In one embodiment of the invention, the means for searching is configured to perform: extracting S and P from the question; determining a number of S's n (n ≥ 2) into which the S extracted from the question is to be divided; dividing the S extracted from the question into n S's, wherein the S is divided into first S, ... nth S; identifying a set of (S, P, O) comprising S and P matching S = first S and P = second S by searching the cluster of attribute information of the individual and identifying O in the identified set of (S, P, O) as first O; repeating (1) identifying a set of (S, P, O) comprising S and P matching S = ith O and P = i + 2th S by searching the cluster of attribute information of the individual and identifying O in the identified set of (S, P, O) as i + 1th O, and (2) incrementing i so that i = i + 1 from i = 1 to i = n; and identifying a set of (S, P, O) comprising S and P matching S = nth O and P = P extracted from the question by searching the cluster of attribute information of the individual and identifying O in the identified set of (S, P, O) as a result of the search.

In one embodiment of the invention, the computer system further comprises: means for receiving natural language data; and means for extracting attribute information of an individual from the natural language data, the attribute information of an individual being expressed by a set of (S, P, O); wherein the means for storing the cluster of attribute information of the individual is configured to accumulate attribute information of an individual expressed by a set of (S, P, O) by storing the extracted attribute information of the individual.

The computer system for utilizing a cluster of attribute information of an individual of the invention comprises: at least one user device; and a server device configured to be able to connect to the at least one user device via a network; wherein the server device is connected to a database unit, a cluster of attribute information of an individual is stored in the database unit, the attribute information of the individual is expressed by a set of (S, P, O), S indicates a subject, P indicates an attribute, and O indicates a value of the attribute, wherein each of the at least one user devices is configured to be able to transmit a request to the server device via the network, and wherein the server device is configured to perform at least: receiving the request via the network; and executing processing to utilize the cluster of attribute information of the individual stored in the database unit in response to the request.

The server device used in the computer system for utilizing a cluster of attribute information of an individual of the invention is configured to be able to connect to at least one user device via a network, wherein the server device is connected to a database unit, a cluster of attribute information of an individual is stored in the database unit, the attribute information of the individual is expressed by a set of (S, P, O), S indicates a subject, P indicates an attribute, and O indicates a value of the attribute, wherein the server device comprises a processor unit, and wherein the processor unit is configured to perform at least: receiving a request via the network from one of the at least one user device; and executing processing to utilize the cluster of attribute information of the individual stored in the database unit in response to the request.

In one embodiment of the invention, a program executed in a server device used in a computer system for utilizing a cluster of attribute information of an individual is provided, the server device being configured to be able to connect to at least one user device via a network, wherein the server device is connected to a database unit, a cluster of attribute information of an individual is stored in the database unit, the attribute information of the individual is expressed by a set of (S, P, O), S indicates a subject, P indicates an attribute, and O indicates a value of the attribute, wherein the server device comprises a processor unit, and wherein the program, when executed by the processor unit, causes the processor unit to perform processing comprising: receiving a request via the network from one of the at least one user device; and executing processing to utilize the cluster of attribute information of the individual stored in the database unit in response to the request.

### [Advantageous Effects of Invention]

The present invention can provide a computer system, a server device, and a program for utilizing a cluster of attribute information of an individual.

### [Brief Description of Drawings]

[Figure 1A] Figure **1A** is a diagram showing user **A** making a personal AI **100** learn an attribute of individual **X.**
[Figure 1B] Figure **1B** is a diagram showing the personal AI **100** materializing a "digital clone" of individual **X** answering questions from multiple users.
[Figure 1C] Figure **1C** is a diagram showing the personal AI **100** materializing a "digital clone" of individual **Y**, who is different from individual **X,** answering questions from multiple users.
[Figure 2] Figure **2** is a diagram depicting an example of a configuration of a computer system **200** for materializing the personal AI **100.**
[Figure 3] Figure **3** is a diagram depicting an example of a data configuration of a cluster of attribute information of an individual stored in a database unit **220.**
[Figure 4] Figure **4** is a block diagram depicting an example of a configuration of a server device **210.**
[Figure 5] Figure **5** is a flowchart depicting an example of processing for storing a cluster of attribute information of an individual by the computer system **200.**
[Figure 6] Figure **6** is a flow chart depicting an example of processing by the computer system **200** answering a question of a user by utilizing a cluster of attribute information of an individual when the cluster of attribute information of an individual is utilized in personal AI.
[Figure 7] Figure **7** is a flow chart depicting an example of the search methodology in step **S604.**
[Figure 8] Figure **8** is a diagram showing a conventional interactive device **11** answering questions from a user.

### [Description of Embodiments]

The embodiments of the invention are explained hereinafter with reference to the drawings.

### 1. Personal AI materializing "digital clone" of a human

The inventors of the invention have developed personal artificial intelligence (personal AI). Personal AI learns information of a person, e.g., action or thought of the person, to act like the person. As a result, a "digital clone" of the person can be materialized by the personal AI. A "digital clone" can answer a question or perform a task in place of the person.

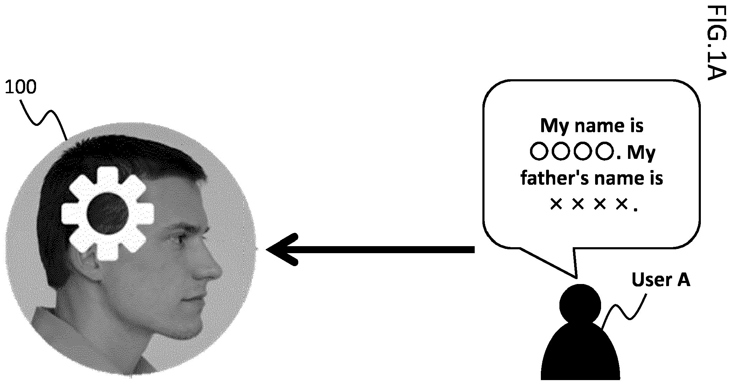

Figure **1A** shows user **A** making a personal AI **100** learn an attribute of individual **X.**

The user **A** inputs "My name is ○○○○. My father's name is ××××" to make the personal AI **100** learn an attribute of individual **X.** The user **A** can input any other information to make the personal AI **100** learn an attribute of individual **X.** The user **A** can input, for example, the place of birth of individual **X**, hobby of individual **X**, occupation of individual **X**, or the like into the personal AI **100**. In this regard, the method of input can be any method. For example, text can be inputted into the personal AI **100**, or an input other than text (e.g., speech) can be inputted into the personal AI **100** by the user. When a user inputs an input other than text into the personal AI **100**, the personal AI **100** can be configured to convert an input other than text into text. This enables the personal AI **100** to perform processing for a user input that is an input other than text, which is the same processing for a user input that is a text input.

The personal AI **100** learns an attribute of individual **X.** Specifically, the personal AI **100** extracts information related to an attribute of individual **X** from an input by the user **A** and systematically stores the information to learn the attribute of individual **X.** The personal AI **100** which has learned an attribute of individual **X** can materialize a "digital clone" of individual **X** that can answer a question related to the attribute of individual **X.**

While the user **A** inputted an attribute of individual **X** to make the personal AI **100** learn in order to materialize a "digital clone" of individual **X** by the personal AI **100**, the user **A** can also materialize a "digital clone" of the user **A** by inputting his/her own attribute.

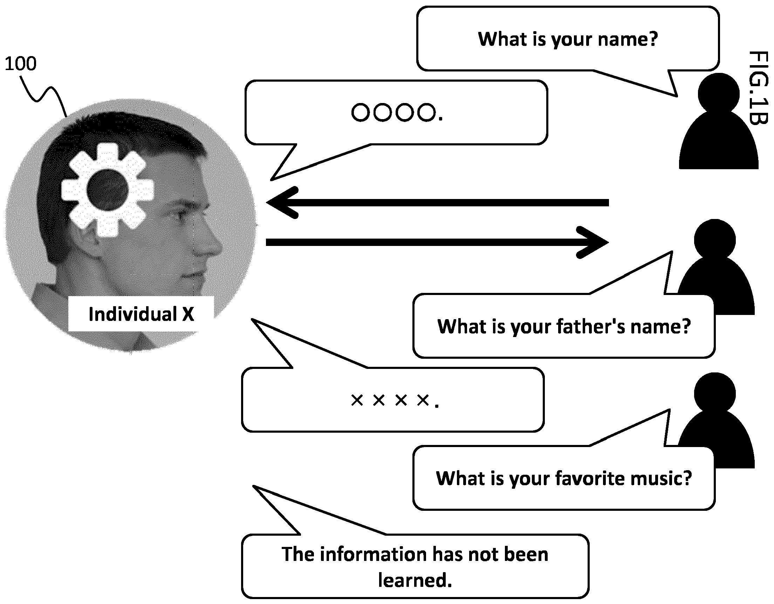

Figure **1B** shows the personal AI **100** materializing a "digital clone" of individual **X** answering questions from multiple users.

The personal AI **100** can answer questions from multiple users based on an attribute of individual **X** that has been already learned. For example, the personal AI **100** answers "○○○○" to the question "what is your name?" from a user because the personal AI **100** has already learned that individual **X**'s name is ○○○○. For example, the personal AI **100** answers "××××" to the question "What is your father's name?" from a user because the personal AI **100** has already learned that the name of individual **X**'s father is ××××. For example, the personal AI **100** answers "The information has not been learned" to the question "What is your favorite music?" from a user because the personal AI **100** has not learned individual **X**'s favorite music. The personal AI **100** answers a question related to an attribute of individual **X** in place of individual **X.**

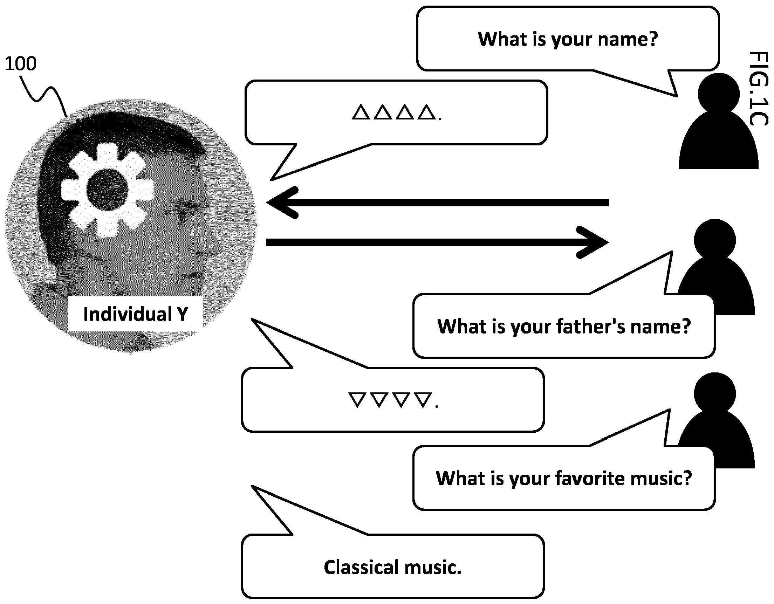

Figure **1C** shows the personal AI **100** materializing a "digital clone" of individual **Y**, who is different from individual **X**, answering questions from multiple users.

The personal AI **100** gives an answer that is different from an answer given by the personal AI **100** materializing a "digital clone" of individual **X.** This is because individual **X** and individual **Y** have different attributes, so that information that is inputted to make the personal AI learn individual properties of individual **X** and information that is inputted to make the personal AI learn individual properties of individual **Y** by the user **A** are different, resulting in information learned by the personal AI **100** being different. For example, if the user **A** has inputted "My name is ΔΔΔΔ. My father's name is ∇∇∇∇. My favorite music is classical music" so that the personal AI **100** has learned such information as attributes of individual **Y**, the personal AI **100** answers "ΔΔΔΔ" to the question "What is your name?" from a user because the personal AI **100** has already learned that the name of individual **Y** is ΔΔΔΔ. The personal AI **100** answers "∇∇∇∇" to the question "What is your father's name?" from a user because the personal AI **100** has already learned that the name of individual **Y**'s father is ∇∇∇∇. The personal AI **100** answers "classical music" to the question "What is your favorite music?" from a user because the personal AI **100** has already learned that individual **Y**'s favorite music is classical music. In this manner, the personal AI **100** can not only give different answers to the same question depending the individual whose digital clone is materialized, but also give an answer that is specialized for the individual. A user asking a question can obtain an answer to a question from personal AI of a desirable person by asking a question after selecting in advance whose answer the questioning user would like to hear.

### 2. Configuration of computer system 200 for materializing personal AI 100

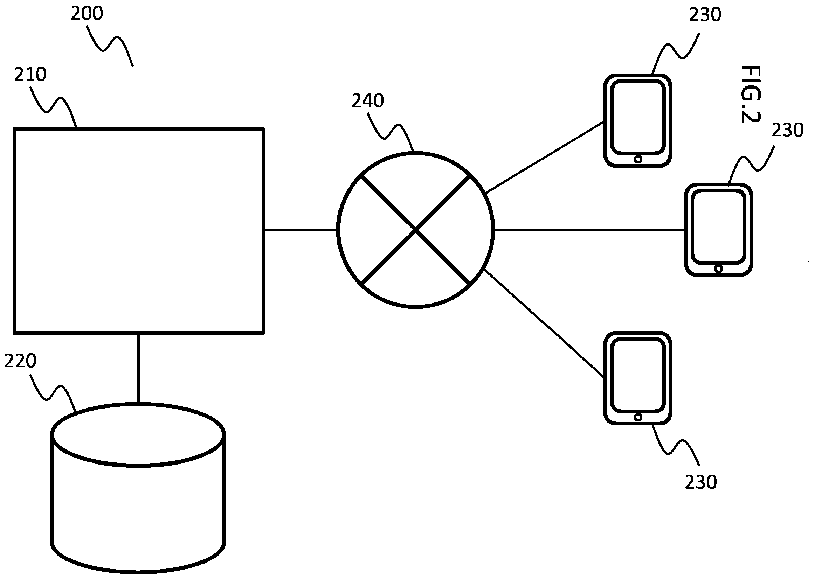

Figure **2** depicts an example of a configuration of a computer system **200** for materializing the personal AI **100.**

The computer system **200** comprises a server device **210**, a database unit **220** connected to the server device **210**, and a user device **230** connected to the server device **210** via a network **240.** The user device **230** can be any terminal device such as a personal computer, tablet, or smartphone. The user device **230** can communicate with the server device **210** via the network **240.** In this regard, the network **240** can be any type of network. For example, the user device **230** can communicate with the server device **210** via the Internet, or communicate with the server device **210** via LAN.

The database unit **220** stores a cluster of attribute information of an individual. Attribute information of an individual is expressed by a set of (S, P, O). In this regard, S is an element indicating a subject (Subject), P is an element indicating an attribute (Predicate), and O is an element indicating a value of the attribute (Object).

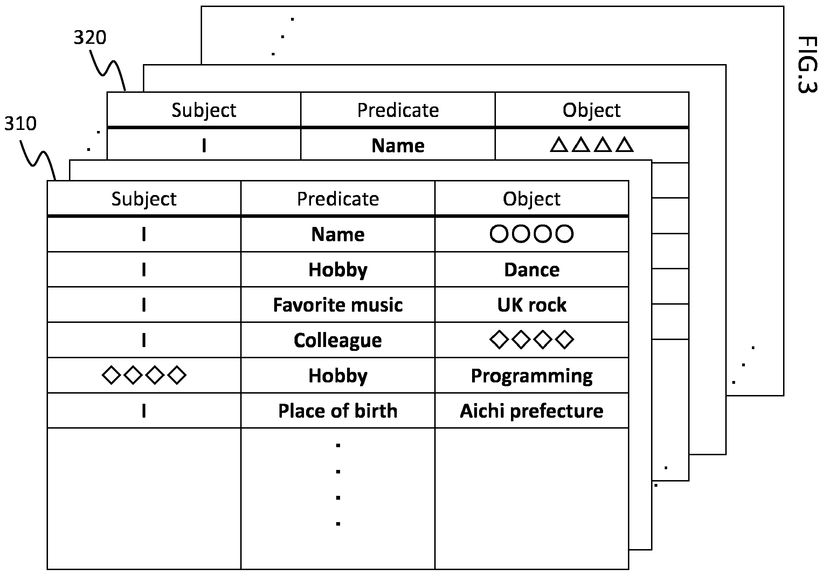

Figure **3** depicts an example of a data configuration of a cluster of attribute information of an individual stored in the database unit **220.**

The database unit **220** stores attribute information of an individual, with S (Subject), P (Predicate), and O (Object) as a set. The database unit **220** comprises a database for storing attribute information of individuals by each individual. For example, the database unit **220** comprises a database **310** for storing attribute information of individual **X** and a database **320** for storing attribute information of individual **Y.** For example, the database **310** stores a set of (S = I, P = name, O = ○○○○), a set of (S = I, P = hobby, O = dance), a set of (S = I, P = favorite music, O = UK rock), a set of (S = I, P = colleague, O = ◇◇◇◇), and the like as attribute information of individual **X.** For example, the database **320** stores a set of (S = I, P = name, O = ΔΔΔΔ) and the like as attribute information of individual **Y.**

For example, attribute information of an individual stored in the database unit **220** can express an individual property of an individual by a set of S, P, O. The set of S, P, O expressing an individual property of an individual is, for example, a set of (S = I, P = hobby, O = dance), a set of (S = ◇◇◇◇, P = special talent, O = programming), or the like. A set of S, P, O expressing an individual property of an individual can be any other set.

For example, attribute information of an individual stored in the database unit **220** can express memory of the individual by a set of S, P, O. A set of S, P, O expressing memory of the individual can be, for example, a set of "S = I, P = place of birth, O = Aichi prefecture), (S = I, P = dream, O = programmer), a set of (S = I, P = previous job, O = musician), or the like. A set of S, P, O expressing memory of an individual can be any other set.

For example, attribute information of an individual stored in the database unit **220** can express a subjective attribute of the individual by a set of S, P, O. A subjective attribute of an individual is an attribute dependent on the subjectivity of the individual. For example, a set of S, P, O expressing a subjective attribute of an individual is a set (S = steel, P = color, O = brown) when the color of steel for individual **X** is brown, a set (S = steel, P = color, O = silver) when the color of steel for individual **Y** is silver, a set (S = apple, P = color, O = red) when the color of apple for individual **X** is red, a set (S = apple, P = color, O = green) when the color of apple for individual **Y** is green, or the like. A set of S, P, O expressing a subjective attribute of an individual can be any other set.

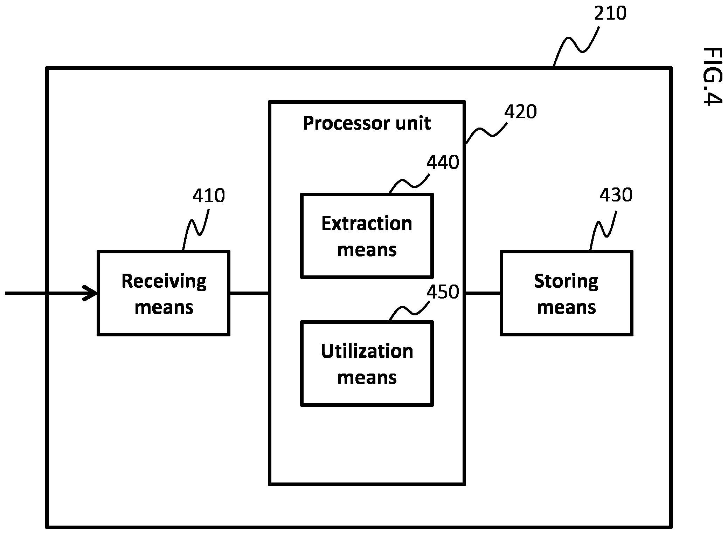

Figure **4** depicts an example of a configuration of the server device **210.**

The server device **210** comprises receiving means **410**, a processor unit **420**, and storing means **430.** The processor unit **420** comprises extraction means **440** and utilization means **450.**

The receiving means **410** receives any data from the outside of the server device **210.** The receiving means **410** can receive natural language data from the outside of the server device **210.** The data received by the receiving means **410** can be of any form. For example, the receiving means **410** can receive data in a text format, or data can be received as speech. The receiving means **410** can receive data in any manner. For example, the receiving means **410** can receive data from manual input by a user or receive data via a network or the like. When the receiving means **410** receives data via a network or the like, the network can be any type of network. For example, the receiving means **410** can receive data via the Internet or via LAN. For example, the receiving means **410** can receive data that is read out from a storage medium that stores data.

The processor unit **420** executes processing of the server device **210** and controls the overall operation of the server device **210.** The processor unit **420** reads out a program stored in the storing means **430** and executes the program. This allows the server device **210** to function as a device that executes a desired step. The processor unit **420** can be implemented by a single processor or multiple processors.

The storing means **430** stores a program required for executing processing of the server device **210**, data required for executing the program, or the like. The storing means **430** can store a program causing the processor unit **420** to execute processing for utilizing a cluster of attribute information of an individual. The storing means **430** can be implemented by any storing means.

The extraction means **440** within the processor unit **420** executes processing for extracting attribute information of an individual from natural language data received by the receiving means **410.** The attribute information of an individual can be extracted by the extraction means **440** in any manner. The extraction means **440** can extract attribute information of an individual using, for example, a rule-based extraction methodology for extracting corresponding data using regular expression or the like. The extraction means **440** can also extract attribute information of an individual using, for example, a grammar based extraction methodology. The extraction means **440** can also extract attribute information of an individual using a data driven methodology for obtaining information such as "Taro = person's name" using a technology of named entity extraction or the like to extract information using such information as a hint. The extraction means **440** can also extract attribute information of an individual by machine learning using, for example, deep learning or the like using a sentence including past extracted data or the like as training data. The extraction means **440** can extract attribute information of an individual by combining, for example, a rule-based extraction methodology, grammar based extraction methodology, data driven methodology, and machine learning. Attribute information of an individual extracted by the extraction means **440** is stored in the database unit **220** that is connected to the server device **210.**

The utilization means **450** within the processor unit **420** executes processing for utilizing a cluster of attribute information of an individual stored in the database unit **220** for any application. The utilization means **450** can execute processing for utilizing a cluster of attribute information of an individual in response to a request by a user received from the outside of the server device **210.** For example, the utilization means **450** can utilize a cluster of attribute information of an individual for the personal AI **100** described above. In this regard, the utilization means **450** obtains information that is suitable for an answer to a question by a user that has been inputted to the computer system **200** by searching a cluster of attribute information of an individual stored in the database unit **220** in response to the question. The unitization means **450** can utilize a cluster of attribute information of an individual in order to generate, for example, a lifelog (action history information). For example, a lifelog for tracking a change in attributes of an individual over time can be created by storing attributes that can change over time such as "current address" or "hobby", including the temporal information thereof, in the database unit **220.** In this regard, the utilization means **450** obtains information that is suitable for creating a lifelog by searching a cluster of attribute information of an individual stored in the database unit **220** in response to receiving a request to create a lifelog from a user.

In the example depicted in Figure **4**, each constituent element of the server device **210** is provided within the server device **210**, but the present invention is not limited thereto. A system with one of the constituent elements of the server device **210** provided externally to the server device **210** can also be constructed. For example, the receiving means **410**, the processor unit **420**, and the storing means **430** can be comprised of separate hardware parts from one another, and each hardware part can be connected via any network. For example, the extraction means **440** and the utilization means **450** can be external to the processor unit **420**, the receiving means **410**, the processor unit **420**, the storing means **430**, the extraction means **440**, and the utilization means **450** can be comprised of separate hardware parts from one another, and each hardware part can be connected via any network. In this regard, the network can be any type of network. Each hardware part can be connected via the Internet, LAN, wireless connection, or wired connection.

In the example depicted in Figure **4**, the database unit **220** is provided external to the server device **210**, but the present invention is not limited thereto. The database unit **220** can also be provided internal to the server device **210.** In this regard, the database unit **220** can be implemented by the same or different storing means as the storing means **430.** The configuration of the database unit **220** is not limited to a specific hardware configuration. For example, the database unit **220** can be comprised of a single hardware part or multiple hardware parts. For example, the database unit **220** can be configured as an external hard disk drive of the server device **210** or as cloud storage connected via a network.

The example described above has explained that the database unit **220** stores a cluster of attribute information of an individual, but the information stored by the database unit **220** is not limited to a cluster of attribute information of an individual. The database unit **220** can store any other information. For example, the database unit **220** can store universal corresponding relationship between two items in an encyclopedic manner in the same manner as a conventional database unit **20**.

The example described above has explained that a user communicates with the server device **210** via the network **240** using the user device **230**, but a user can interact with the computer system **200** in any manner. A user can indirectly interact with the computer system **200** using the user device **230** connected to the network **240**, or directly interact with the computer system **200** without going through the network **240.**

The server device **210** is connected to the external database unit **220** external to the server device **210** in the example described above, but the present invention is not limited thereto. The database unit **220** can be outside or inside the server device **210.** If outside the server device **210**, the server device **210** and the database unit **220** can be connected in any manner, e.g., connection via the Internet, a local area network, wireless connection, or wired connection.

The computer system **200** described above can utilize a cluster of attribute information of an individual stored in the database unit **220** in any application in response to a user request inputted into the user device **230.** The personal AI **100** explained with reference to Figures **1A** to **1C** is one utilization example of a cluster of attribute information of an individual.

### 3. Processing for learning attribute of individual by computer system 200

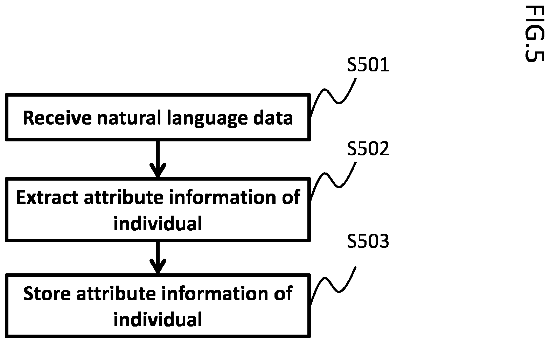

As a premise for the computer system **200** to utilize a cluster of attribute information of an individual, the computer system **200** needs to learn an attribute of an individual in advance. Figure **5** depicts an example of processing for learning an attribute of an individual by the computer system **200.**

In step **S501**, the receiving means **410** of the server device **210** of the computer system **200** receives natural language data. The receiving means **410** receives natural language data that has been inputted into the user device **230** of the computer system **200** by a user.

In step **S502**, the extraction means **440** within the processor unit **420** of the server device **210** extracts attribute information of an individual from natural language data. The extraction means **440** extracts attribute information of an individual by any extraction methodology from the natural language data received by the receiving means **410.** For example, the extraction means **440** can extract attribute information of an individual by combining a rule based extraction methodology, grammar based extraction methodology, data driven methodology, and machine learning.

For example, a set of S, P, O, i.e., (S = I, P = name, O = ○○○○), is extracted from the received natural language data of "My name is ○○○○". For example, a set of (S = I, P = hobby, O = dance) is extracted from the received natural language data of "My hobby is dance". For example, sets of (S = I, P = colleague, O = ◇◇◇◇) and (S = ◇◇◇◇, P = special talent, O = programming) are extracted from the received natural language data, "The special talent of my colleague ◇◇◇◇ is programming".

In step **S503**, the server device **210** stores attribute information of an individual in the database unit **220.** The server device **210** stores attribute information of an individual expressed by a set of (S, P, O), which represents an attribute of an individual extracted by the extraction means **440**, in the database unit **220.**

The computer system **200** stores multiple attribute information of individual representing attributes of the individual into the database unit **220** and accumulates attribute information of individual expressed by sets of (S, P, O) in the database unit **220** by repeating the processing of **S501** to **S503.** The database unit **220** stores a cluster of attribute information of individual thereby. In this manner, the computer system **200** learns an attribute of an individual.

### 4. Processing for utilizing a cluster of attribute information of an individual by computer system 200

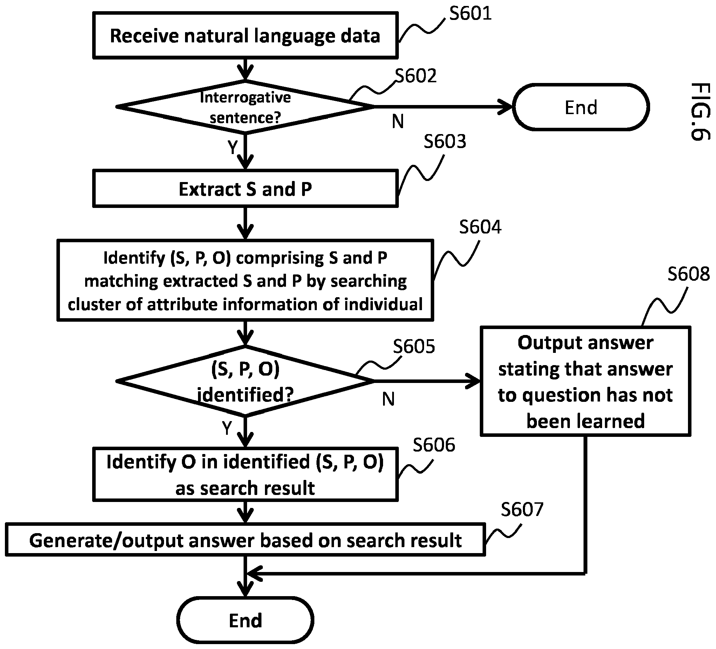

Figure **6** depicts an example of processing for answering a user question as an exemplary embodiment of the computer system **200** utilizing a cluster of attribute information of an individual. The computer system **200** is assumed to have already stored a cluster of attribute information of an individual in the database unit **220.**

In step **S601**, the receiving means **410** of the server device **210** first receives natural language data. The receiving means **410** receives natural language data that has been inputted into the user device **230** of the computer system **200.**

In step **S602**, the processor unit **420** of the server device **210** determines whether the received natural language data is an interrogative sentence. The methodology to determine whether data is an interrogative sentence can be any methodology. For example, it can be determined that data is an interrogative sentence by extracting an interrogative word within the natural language data. For example, if natural language data is received as speech, the data can be determined as an interrogative sentence by the intonation at the end of the sentence. If it is determined that the data is an interrogative sentence in step **S602**, the process proceeds to step **S603.** If the data is determined not to be an interrogative sentence in step **S602**, the processing to answer a user question ends.

In step **S603**, the extraction means **440** within the processor unit **420** of the server device **210** extracts S and P among attribute information of an individual from the received natural language data. The extraction means **440** can extract S and P by any extraction methodology.

In step **S604**, the utilization means **450** within the processor unit **420** of the server device **210** identifies (S, P, O) comprising S and P matching the extracted S and P by searching a cluster of attribute information of an individual stored in the database unit **220.** A cluster of attribute information of an individual stored in the database unit **220** can be searched using any methodology. In this regard, the utilization means **450** can apply a conditional equation such as "if S extracted in step **S603** is (S = you), it shall be (S = I)" prior to the search. This enables a suitable search even if different terms refer to the same subject (e.g., first person, second person, etc.)

In step **S605**, it is determined whether the utilization means **450** within the processor unit **420** of the server device **210** has identified (S, P, O) comprising S and P matching the extracted S and P. If it is determined that the utilization means **450** has identified (S, P, O), the process proceeds to step **S606.** If it is determined that the utilization means **450** was not able to identify (S, P, O), the process proceeds to step **S608.**

In step **S606**, the utilization means **450** within the processor unit **420** of the server device **210** identifies O in the identified (S, P, O) as a search result.

In step **S607**, the utilization means **450** within the processor unit **420** of the server device **210** generates an answer to a question based on the search result and outputs the answer. For example, the utilization means **450** generates and outputs an answer to a question such as "××××", based on (O = ××××) in the identified (S, P, O). The method of outputting with the utilization method **450** can be any method. For example, the utilization means **450** can output O by speech or text.

In step **S608**, the utilization means **450** within the processor unit **420** of the server device **210** outputs that the answer to the question has not been learned. This is because a suitable answer to a question from a user could not be identified. The method of outputting by the utilization method **450** can be any method. For example, the utilization means **450** can output a response by speech or text.

After outputting an answer to a question or outputting that the answer to the question has not been learned, processing to answer a user question ends.

In this regard, processing by the computer system **200** when the personal AI **100** materializing a digital clone of individual **X** provides an answer to the question "What is your name?" by user **Z** is explained as an example. It is assumed that a set of S, P, O of (S = I, P = name, O = ○○○○) representing the attribute "name" of individual **X** is already stored in the database unit **220.**

In step **S601**, the receiving means **410** of the server device **210** first receives natural language data "What is your name?" that has been inputted into the user device **230** by the user **Z.**

In step **S602,** the processor unit **420** of the server device **210** determines whether the received natural language data "What is your name?" is an interrogative sentence. In this regard, the natural language data "What is your name?" is an interrogative sentence, so that the process proceeds to step **S603.**

In step **S603**, the extraction means **440** within the processor unit **420** of the server device **210** extracts S and P among attribute information of an individual from the received natural language data "What is your name?". In this regard, a set of S and P of (S = you, P = name) is extracted.

In step **S604**, the utilization means **450** within the processor unit **420** of the server device **210** identifies (S, P, O) comprising S and P matching the extracted S and P by searching a cluster of attribute information of an individual stored in the database unit **220.** The utilization means **450** searches after applying the conditional equation "If S extracted in step **S603** is (S = you), it shall be (S = I)" and converting (S = you) to (S = I). Since a set of S, P, O of (S = I, P = name, O = ○○○○) is stored in the database unit **220**, the utilization means **450** can identify (S = I, P = name, P = ○○○○) comprising (S = I, P = name) by any searching methodology.

In step **S605**, the utilization means **450** within the processor unit **420** of the server device **210** determines whether (S, P, O) comprising the extracted S and P has been identified. Since the utilization means **450** has identified (S = I, P = name, O = ○○○○) comprising (S = I, P = name), the process proceeds to step **S606.**

In step **S606**, the utilization means **450** within the processor unit **420** of the server device **210** identifies (O = ○○○○) in the identified (S = I, P = name, O = ○○○○) as a search result.

In step **S607**, the utilization means **450** within the processor unit **420** of the server device **210** generates and outputs an answer to the question "○○○○" based on the search result. The process then ends.

With such processing by the computer system **200**, the personal AI **100** materializing a digital clone of individual **X** can provide an answer of "○○○○" to the question "What is your name?".

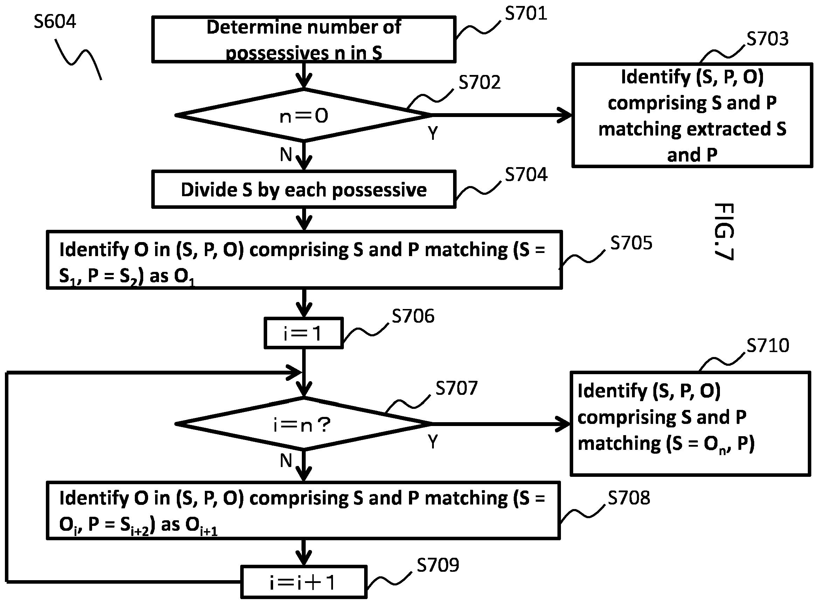

Figure **7** depicts an example of a searching methodology in step **S604.** Such a searching methodology can be used when searching a cluster of attribute information of an individual stored in the database unit **220** in order to identify (S, P, O) comprising (S, P) when the extracted S contains a possessive.

In step **S701**, the utilization means **450** determines the number of possessives n in S. For example, the number of possessives n of "S = you" extracted from the question "What is your name?" is n = 0. For example, the number of possessives n of (S = brother of mother of you) extracted from the question "What is the hobby of the brother of your mother?" is n = 2.

In step S702, the utilization means **450** determines whether n = 0. If n = 0, the process proceeds to step **S703.** If not n = 0, the process proceeds to step **S704.**

In step **S703**, S does not have a possessive, so that the utilization means **450** identifies (S, P, O) comprising the extracted (S, P) by simply searching a cluster of attribute information of an individual stored in the database unit **220.**

In step **S704**, the utilization means **450** divides S for each possessive, such that S is expressed as (S = Sₙ₊₁ of ... of S₂ of S₁). For example, the aforementioned (S = brother of mother of you) would be (S₁ = you, S₂ = mother, S₃ = brother).

In step **S705**, the utilization means **450** identifies O in (S, P, O) comprising S, P matching (S = S₁, P = S₂) as O₁ by searching a cluster of attribute information of an individual stored in the database unit **220**. For example, if a set of S, P, O of (S = I, P = mother, O = Hanako) is stored in the database unit **220** when (S = brother of mother of you) as described above, the utilization means **450** first applies the condition equation of "if S extracted in step **S603** is (S = you), it shall be (S = I)" to convert (S = you) to (S = I) and then searches a cluster of attribute information of an individual stored in the database unit **220** to identify (O = Hanako) in (S = I, P = mother, O = Hanako) comprising (S = I, P = mother) as O₁, such that (O₁ = Hanako).

In step **S706**, variable i is defined as i = 1.

In step **S707**, the utilization means **450** determines whether i = n. If not i = n, the process proceeds to step **S708.**

In step **S708**, the utilization means **450** identifies O in (S, P, O) comprising S and P matching (S = Oᵢ, P = S_{i + 2}) as O_{i + 1} by searching a cluster of attribute information of an individual stored in the database unit **220.** For example, if a set of S, P, O of (S = Hanako, P = brother, O = Taro) is stored in the database unit **220** when (S = brother of mother of you) as described above, the utilization means **450** identifies (O = Taro) in (S = Hanako, P = brother, O = Taro) comprising (S = O₁ = Hanako, P = S₃ = brother) as O₂ by searching a cluster of attribute information of an individual stored in the database unit **220**, such that (O₂ = Taro).

In step **S709**, variant i is incremented. **S707** to **S709** are repeated until i = n. If it is determined that i = n in step **S707**, the process proceeds to step **S710.**

In step **S710**, the utilization means **450** identifies (S, P, O) comprising S and P matching (S = Oₙ, P) by searching a cluster of attribute information of an individual stored in the database unit **220**. For example, if a set of S, P, O of (S = Taro, P = hobby, O = programming) is stored in the database unit **220** when (S = brother of mother of you) as described above, the utilization means **450** identifies (S = Taro, P = hobby, O = programming) comprising (S = O₂ = Taro, P = hobby) by searching a cluster of attribute information of an individual stored in the database unit **220**.

In this manner, a suitable search can be performed to generate an answer to a question even if S extracted from the question contains a possessive.

The processing described above is one example, so that the utilization means **450** can process using any other algorithm. The example described above determined the number of possessives n contained in S and divided S for each possessive, but the utilization means **450** can divide S using any other criteria.

While the example described above has explained an example of the computer system **200** utilizing a cluster of attribute information of an individual for the personal AI **100**, the computer system **200** can utilize a cluster of attribute information of an individual in any other application. For example, the computer system **200** can utilize a cluster of attribute information of an individual in fields such as speech recognition, input prediction, search engines, bots, Email autoreply, chat autoreply, CS support, or expert system.

The present invention is not limited to the aforementioned embodiments. It is understood that the scope of the present invention should be interpreted solely by the scope of the claims. It is understood that those skilled in the art can implement an equivalent scope, based on the descriptions of the invention and common general knowledge, from the descriptions of the specific preferred embodiments of the invention.

### [Industrial Applicability]

The present invention has utility as an invention providing a computer system, a server device, and a program for utilizing a cluster of attribute information of an individual.

### [Reference Signs List]

- **100**: Personal AI
- **200**: Computer system
- **210**: Server device
- **220**: Database unit
- **230**: User device
- **240**: Network

## Claims

1. A computer system for utilizing a cluster of attribute information of an individual, the computer system comprising:
means for storing a cluster of attribute information of an individual, wherein the attribute information of the individual is expressed by a set of (S, P, O), S indicates a subject, P indicates an attribute, and O indicates a value of the attribute; and
means for utilizing the cluster of attribute information of the individual.

2. The computer system of claim 1, wherein the attribute of the individual comprises an individual property of the individual or memory of the individual.

3. The computer system of claim 1 or 2, wherein the attribute of the individual is dependent on a subjective view of the individual.

4. The computer system of any one of claims 1 to 3, wherein the computer system further comprises means for receiving a question,
wherein the means for utilizing the cluster of attribute information of the individual comprises:
means for searching the cluster of attribute information of the individual based on the question;
means for generating an answer to the question based on a result of the search; and
means for outputting the answer.

5. The computer system of claim 4, wherein the means for searching comprises:
means for extracting S and P from the question;
means for identifying a set of (S, P, O) comprising S and P matching the S and P extracted from the question by searching the cluster of attribute information of the individual; and
means for identifying O in the identified set of (S, P, O) as a result of the search.

6. The computer system of claim 4, wherein the means for searching is configured to perform:
extracting S and P from the question;
determining a number of S's n (n ≥ 2) into which the S extracted from the question is to be divided;
dividing the S extracted from the question into n S's, wherein the S is divided into first S, ... nth S;
identifying a set of (S, P, O) comprising S and P matching S = first S and P = second S by searching the cluster of attribute information of the individual and identifying O in the identified set of (S, P, O) as first O;
repeating
(1) identifying a set of (S, P, O) comprising S and P matching S = ith O and P = i + 2th S by searching the cluster of attribute information of the individual and identifying O in the identified set of (S, P, O) as i + 1th O, and
(2) incrementing i so that i = i + 1
from i = 1 to i = n; and
identifying a set of (S, P, O) comprising S and P matching S = nth O and P = P extracted from the question by searching the cluster of attribute information of the individual and identifying O in the identified set of (S, P, O) as a result of the search.

7. The computer system of any one of claims 1 to 6, wherein the computer system further comprises:
means for receiving natural language data; and
means for extracting attribute information of an individual from the natural language data, the attribute information of an individual being expressed by a set of (S, P, O);
wherein the means for storing the cluster of attribute information of the individual is configured to accumulate attribute information of an individual expressed by a set of (S, P, O) by storing the extracted attribute information of the individual.

8. A computer system for utilizing a cluster of attribute information of an individual, the computer system comprising:
at least one user device; and
a server device configured to be able to connect to the at least one user device via a network;
wherein the server device is connected to a database unit, a cluster of attribute information of an individual is stored in the database unit, the attribute information of the individual is expressed by a set of (S, P, O), S indicates a subject, P indicates an attribute, and O indicates a value of the attribute,
wherein each of the at least one user devices is configured to be able to transmit a request to the server device via the network, and
wherein the server device is configured to perform at least:
receiving the request via the network; and
executing processing to utilize the cluster of attribute information of the individual stored in the database unit in response to the request.

9. A server device used in a computer system for utilizing a cluster of attribute information of an individual, the server device being configured to be able to connect to at least one user device via a network,
wherein the server device is connected to a database unit, a cluster of attribute information of an individual is stored in the database unit, the attribute information of the individual is expressed by a set of (S, P, O), S indicates a subject, P indicates an attribute, and O indicates a value of the attribute,
wherein the server device comprises a processor unit, and
wherein the processor unit is configured to perform at least:
receiving a request via the network from one of the at least one user device; and
executing processing to utilize the cluster of attribute information of the individual stored in the database unit in response to the request.

10. A program executed in a server device used in a computer system for utilizing a cluster of attribute information of an individual, the server device being configured to be able to connect to at least one user device via a network,
wherein the server device is connected to a database unit, a cluster of attribute information of an individual is stored in the database unit, the attribute information of the individual is expressed by a set of (S, P, O), S indicates a subject, P indicates an attribute, and O indicates a value of the attribute,
wherein the server device comprises a processor unit, and
wherein the program, when executed by the processor unit, causes the processor unit to perform processing comprising:
receiving a request via the network from one of the at least one user device; and
executing processing to utilize the cluster of attribute information of the individual stored in the database unit in response to the request.
